(19) Europäisches Patentamt
European Patent Office
Office européen des brevets

(11) **EP 3 542 218 B1**

(12) **EUROPEAN PATENT SPECIFICATION**

(45) Date of publication and mention
of the grant of the patent:
**17.03.2021 Bulletin 2021/11**

(51) Int Cl.:
*G03B 13/34* (2021.01)       *G02B 7/36* (2021.01)
*H04N 13/246* (2018.01)     *H04N 5/232* (2006.01)
*G06T 7/80* (2017.01)        *H04N 17/00* (2006.01)
*G03B 43/00* (2021.01)       *G03B 13/36* (2021.01)

(21) Application number: **17870836.8**

(22) Date of filing: **20.11.2017**

(86) International application number:
**PCT/FI2017/050795**

(87) International publication number:
**WO 2018/091785 (24.05.2018 Gazette 2018/21)**

(54) **METHOD AND APPARATUS FOR CALIBRATION OF A CAMERA UNIT**

VERFAHREN UND VORRICHTUNG ZUR KALIBRIERUNG EINER KAMERAEINHEIT

PROCÉDÉ ET APPAREIL POUR L'ÉTALONNAGE D'UNE UNITÉ DE CAMÉRA

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.11.2016 FI 20165878**

(43) Date of publication of application:
**25.09.2019 Bulletin 2019/39**

(73) Proprietor: **Nokia Technologies Oy
02610 Espoo (FI)**

(72) Inventors:
• **BALDWIN, Andrew
33230 Tampere (FI)**
• **BURIAN, Adrian
33710 Tampere (FI)**
• **SIPINEN, Ville-Markus
33720 Tampere (FI)**

(74) Representative: **Berggren Oy, Tampere
Visiokatu 1
33720 Tampere (FI)**

(56) References cited:
WO-A1-2016/045086       JP-A- 2005 003 463
JP-A- 2012 042 728       JP-A- 2016 042 194
JP-A- 2016 042 194       US-A1- 2006 062 484
US-A1- 2008 122 940      US-A1- 2009 273 681
US-A1- 2012 281 130      US-A1- 2013 107 107
US-A1- 2016 014 405

**Description**

TECHNICAL FIELD

The present invention relates to a method for calibration of a focus of a camera unit, an apparatus for calibration of a camera unit, and computer program for calibration of a focus of a camera unit.

BACKGROUND

This section is intended to provide a background or context to the invention that is recited in the claims. The description herein may include concepts that could be pursued, but are not necessarily ones that have been previously conceived or pursued. Therefore, unless otherwise indicated herein, what is described in this section is not prior art to the description and claims in this application and is not admitted to be prior art by inclusion in this section.

Digital cameras have a lens system that focuses light to create images or video representations of a viewed or captured scene. Light gets focused into a semiconductor device that transforms light into electric signals. This kind of semiconductor device may also be called as an image sensor. The image sensor may be, for example, a CMOS (Complementary Metal Oxide Semiconductor) or a CCD (Charge-Coupled Device) sensor. The image sensor may also comprise or is connected to a circuitry which may be used to transform the electric signals into digital information. The image sensor is may be mainly composed of a collection of light-sensitive pixel elements, which convert light into electrical charge and this electronic charge is further converted into digitally represented data by the peripheral circuitry. For this representation of the observed scene to be acceptable as usable and recognisable, adjusting process of the lens system may be needed to achieve good enough focusing for the used camera module. If focusing is not achieved with good enough quality and scene span, the observed scenes may appear blurred and messed up, making the entire imaging system unusable.

The patent application JP 2016-042194 discloses an imaging apparatus which includes an imaging sensor, a focus detection unit which outputs a focus detection signal, and a posture adjustment unit which adjusts posture of the imaging element on the basis of the focus detection signal of the focus detection unit. The focus detection unit may be composed of at least a part of pixels of the imaging element. In the imaging element, at least a part of the pixels may be phase difference detection pixels for detecting phase difference of a subject image. The posture adjustment unit includes a stepping motor which varies the posture of the imaging element.

SUMMARY

Various embodiments provide a method and apparatus for calibration of camera optics. In accordance with an embodiment, there is provided a method for calibration of camera optics. In accordance with an embodiment, a certain calibration image is used which comprises high contrast details. The calibration image may be analyzed by examining different regions of the calibration image to compute how sharp edges there are within the regions. An edge detector operator may be computed for different regions and a focus convergence parameter may be defined by summing edge detector operators of different regions. In the summing different regions may be weighted by a weighting factor.

Various aspects of examples of the invention are provided in the detailed description.

According to a first aspect, there is provided a method for calibrating focus of a camera unit comprising:

    obtaining a first image captured by the camera unit;
    selecting a first set of two or more reference regions from the first image;
    computing a first focus convergence parameter based on the first set of two or more reference regions;
    adjusting optical properties of optics of the camera unit and rotating the camera unit as a whole to change location of a focus of the optics;
    obtaining a second image;
    selecting a second set of the same two or more reference regions from the second image which may be different from the first set of two or more reference regions of the first image;
    computing a second focus convergence parameter based on the second set of two or more reference regions of the second image; and
    comparing the first and second focus convergence parameter to determine if focus quality was improved.

According to a second aspect, there is provided an apparatus comprising at least one processor; and at least one memory including computer program code the at least one memory and the computer program code configured to, with the at least one processor, cause the apparatus to perform at least the following:

obtain a first image captured by a camera unit;

select a first set of two or more reference regions from the first image;

compute a first focus convergence parameter based on the first set of two or more reference regions;

adjust optical properties of optics of the camera unit and rotating the camera unit as a whole to change location of a focus of the optics;

obtain a second image captured by the camera unit;

select a second set of the same two or more reference regions from the second image which may be different from the first set of two or more reference regions of the first image;

compute a second focus convergence parameter based on the second set of two or more reference regions of the second image; and

compare the first and second focus convergence parameter to determine if the focus convergence parameter focus quality was improved.

According to a third aspect, there is provided an apparatus comprising at least one processor; and at least one memory including computer program code the at least one memory and the computer program code configured to, with the at least one processor, cause the apparatus to perform at least the following:

means for obtaining a first image captured by a camera unit;

means for selecting a first set of two or more a reference regions from the first image;

means for computing a first focus convergence parameter based on the first set of two or more reference regions;

means for adjusting optical properties of optics of the camera unit and rotating the camera unit as a whole to change location of a focus of the optics;

means for obtaining a second image captured by the camera unit;

means for selecting a second set of the same two or more reference regions from the second image which may be different from the first set of two or more reference regions of the first image; and

means for computing the a second focus convergence parameter based on second set of the two or more reference regions of the second image;

means for comparing the first and second focus convergence parameter to determine if the focus convergence parameter focus quality was improved.

According to a fourth aspect, there is provided a computer readable storage medium stored with code thereon for use by an apparatus, which when executed by a processor, causes the apparatus to:

obtain a first image captured by a camera unit;

select a first set of two or more reference regions from the first image;

compute a first focus convergence parameter based on the first set of two or more reference regions;

adjust optical properties of optics of the camera unit and rotating the camera unit as a whole to change location of a focus of the optics;

obtain a second image captured by the camera unit;

select a second set of the same two or more reference regions from the second image which may be different from the first set of two or more reference regions of the first image;

compute a second focus convergence parameter based on the second set of two or more reference regions of the second image; and

compare the first and second focus convergence parameter to determine if the focus convergence parameter focus quality was improved.

Some embodiments are disclosed in the dependent claims. As an example, the physical orientation of the camera unit may be changed before capturing the second image.

## BRIEF DESCRIPTION OF THE DRAWINGS

For a more complete understanding of example embodiments of the present invention, reference is now made to the following descriptions taken in connection with the accompanying drawings in which:

Figure 1a shows an example of a multi-camera system as a simplified block diagram, in accordance with an embodiment;

Figure 1b shows a perspective view of a multi-camera system, in accordance with an embodiment;

Figure 2a illustrates operation principle of camera optics to capture an image of a scene, in accordance with an embodiment;
Figure 2b illustrates the camera optics of Figure 3a in a situation in which the lens system is too far away from the image sensor, in accordance with an embodiment;
Figure 2c illustrates the camera optics of Figure 3a in a situation in which the lens system is too close to the image sensor, in accordance with an embodiment;
Figure 3 illustrates a simplified control arrangement for positioning the camera optics, in accordance with an embodiment;
Figure 4 depicts some examples of patterns having high contrast details, in accordance with an embodiment;
Figures 5a-5c illustrate some examples of a calibration image divided into directional regions and area regions, in accordance with an embodiment;
Figure 6 illustrates an example of a region of interest comprising a matrix of pixels, in accordance with an embodiment;
Figure 7 shows a flowchart of a method of focus calibration, in accordance with an embodiment;
Figure 8 shows a schematic block diagram of an exemplary apparatus or electronic device;
Figure 9 shows an apparatus according to an example embodiment; and
Figure 10 shows an example of an arrangement for wireless communication comprising a plurality of apparatuses, networks and network elements.

## DETAILED DESCRIPTON OF SOME EXAMPLE EMBODIMENTS

The following embodiments are exemplary. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments.

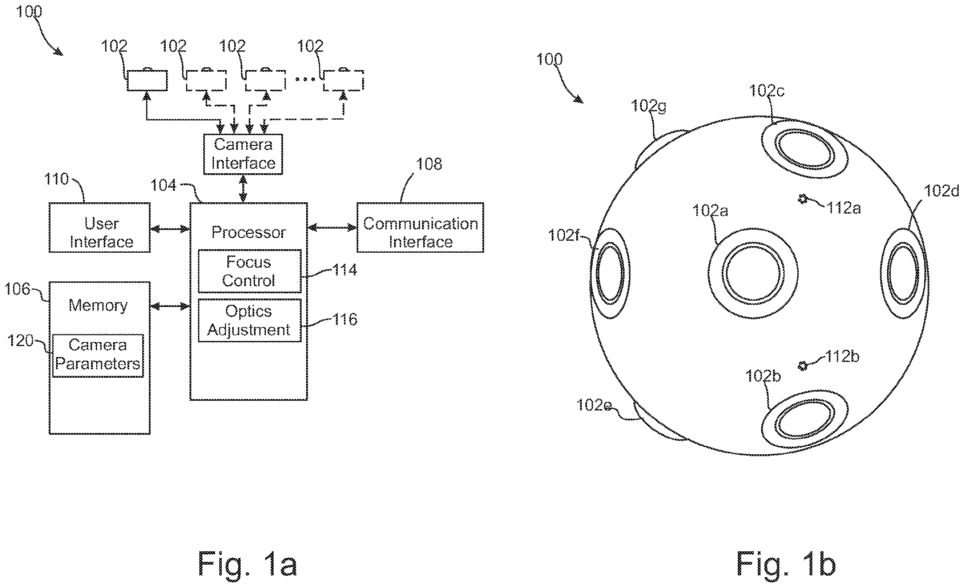

Figure 1a illustrates an example of a multi-camera system 100, which comprises two or more camera units 102. In this example the number of camera units 102 is eight, but may also be less than eight or more than eight. Each camera unit 102 is located at a different location in the multi-camera system and may have a different orientation with respect to other camera units 102. As an example, the camera units 102 may have an omnidirectional constellation so that it has a 360° viewing angle in a 3D-space. In other words, such multi-camera system 100 may be able to see each direction of a scene so that each spot of the scene around the multi-camera system 100 can be viewed by at least one camera unit 102.

The multi-camera system 100 of Figure 1a may also comprise a processor 104 for controlling the operations of the multi-camera system 100. There may also be a memory 106 for for storing data and computer code to be executed by the processor 104, and a transceiver 108 for communicating with, for example, a communication network and/or other devices in a wireless and/or wired manner. The user device 100 may further comprise a user interface (UI) 110 for displaying information to the user, for generating audible signals and/or for receiving user input. However, the multi-camera system 100 need not comprise each feature mentioned above, or may comprise other features as well. For example, there may be electric and/or mechanical elements for adjusting and/or controlling optics of the camera units 102 (not shown).

Figure 1a also illustrates some operational elements which may be implemented, for example, as a computer code in the software of the processor, in a hardware, or both. A focus control element 114 may perform operations related to adjustment of the optical system of camera unit or units to obtain focus meeting target specifications or some other predetermined criteria. An optics adjustment element 116 may perform movements of the optical system or one or more parts of it according to instructions provided by the focus control element 114. It should be noted here that the actual adjustment of the optical system need not be performed by the apparatus but it may be performed manually, wherein the focus control element 114 may provide information for the user interface 110 to indicate a user of the device how to adjust the optical system.

Figure 1b shows as a perspective view an example of an apparatus comprising the multi-camera system 100. In Figure 1b seven camera units 102a-102g can be seen, but the multi-camera system 100 may comprise even more camera units which are not visible from this perspective. Figure 1b also shows two microphones 112a, 112b, but the apparatus may also comprise one or more than two microphones.

It should be noted here that embodiments disclosed in this specification may also be implemented with apparatuses having only one camera units 102 or less or more than eight camera units 102a-102g. Moreover, the principles may also be implemented for each camera unit 102 of a multi-camera system 100 independently, i.e. so that each camera unit may be calibrated without information of or influence by other camera units.

In accordance with an embodiment, the multi-camera system 100 may be controlled by another device (not shown), wherein the multi-camera system 100 and the other device may communicate with each other and a user may use a user interface of the other device for entering commands, parameters, etc. and the user may be provided information from the multi-camera system 100 via the user interface of the other device.

It may be possible to perform some operations before the focus calibration operation to, for example, help the execution of the focus calibration operation. Some non-limiting examples of such operations are linearization, luminance demosaicing etc.

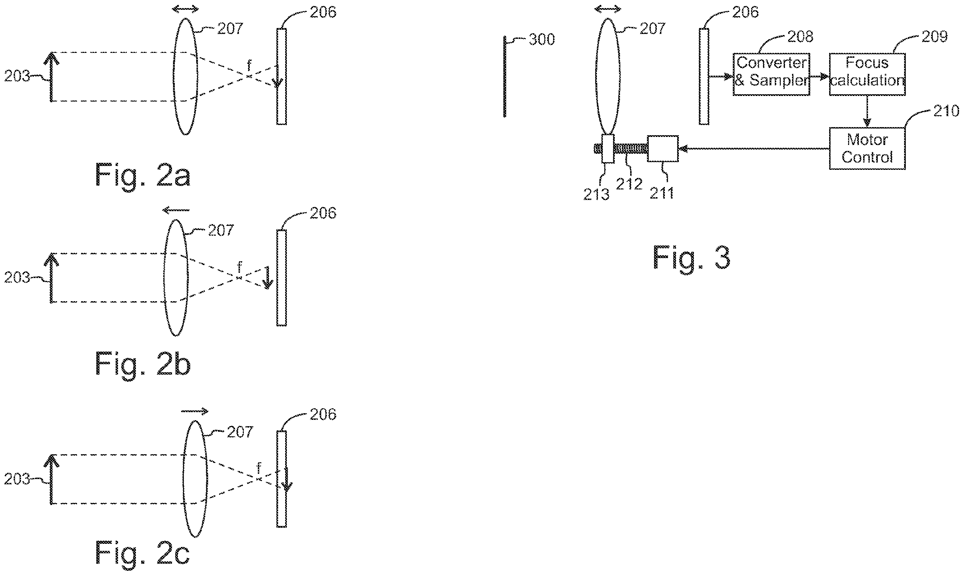

Figures 2a to 2c illustrate an operation principle of camera optics 207 to capture an image of a scene, in accordance with an embodiment. In the example of Figure 2a, the camera optics 207 is located at a position which produces as sharp image of an object 203 as possible on the imaging sensor 206. In other words, the camera optics 207 is at a correct focus. In the example of Figure 2b, the camera optics 207 is located too far from the imaging sensor 206 wherein the produced image may not be correctly focused, and, respectively, in the example of Figure 2c, the camera optics 207 is located too near to the imaging sensor 206 wherein also in this situation the produced image may not be correctly focused. Therefore, by moving the camera optics 207 the image detected by the image sensor 206 may be sharpened or made more blurred.

The camera optics 207 illustrated in Figures 2a-2c is greatly simplified but in practical implementations the camera optics 207 may comprise more than one lens and the lenses may have different cross-sectional shapes. For example, some lenses may be convex and some other lenses may be concave. It is also possible that a lens may have one convex surface and the opposite surface may be concave.

None, one or more of the lenses may be a so called fish eye lens which has quite a large viewing angle, but also other types of lenses may be used.

Moving the camera optics 207 need not be the only possibility to affect the focus point f and/or an optical path of the lens system but in addition to or instead of the form of the cross-section of one or more lenses may be altered. As an example, if the degree of curvature of a convex or concave surface of a lens is changed without moving the lens, the location of the focus of that lens may change. Furthermore, another way to affect optical properties of the combination of the camera optics 207 and the imaging sensor 206 is tilting the camera optics 207 as a whole or one or more lenses of the camera optics 207 and/or the imaging sensor 206. This may affect e.g. so that focus in some areas improves without decreasing focus at some other areas of the imaging sensor. It may also be possible to move the imaging sensor 206 either instead of or in addition to the camera optics 207 so that the distance between the camera optics 207 and the imaging sensor 206 changes.

Yet another example of affecting optical properties of the combination of the camera optics 207 and the imaging sensor 206 is to rotate the camera optics 207 and the imaging sensor 206. This may be utilized, for example, in a situation in which the image on the surface of the imaging sensor 206 is more focused at certain area (e.g. horizontally in the middle area) than outside that area (e.g. at the top and at the bottom of the imaging sensor 206). Hence, if the calibration image has some useful areas having high contrast details also at the areas which will be seen by (projected on) the less focused areas of the imaging sensor 206, the rotation would affect so that at least some of these areas having high contrast details would be seen by (projected on) the more focused areas of the imaging sensor 206.

In the following, a method for calibrating the camera optics 207 will be described in more detail with reference to Figures 2a-2c, and Figures 3-6. Figure 3 illustrates a simplified control arrangement for positioning the camera optics 207. A calibration image 300 is positioned in front of the camera optics 207 at a distance from the camera optics 207 so that the calibration image 300 is within a viewing area of the camera optics 207. The camera optics 207 produces an image of the calibration image 300 on an active surface of the imaging sensor 206. The imaging sensor 206 comprises a plurality of photo sensitive pixel elements (not shown) which transform light radiation affecting to the pixel element to electrical signals. These electrical signals are converted to digital samples by a converter and sampler 208. Therefore, the samples represent visual information of the pixel elements. The visual information may comprise a luminance component and two chrominance components, or a red component, a green component and a blue component, or some other form of image information. The samples are provided to a focus calculation unit 209.

The active surface of the imaging sensor 206 means the surface at which the surface of the photo sensitive pixel elements are located and light radiation is received.

The focus calculation unit 209 uses the image information to deduce whether the camera optics 207 is at a correct focus position or whether the focus point of the camera optics 207 should be changed. If the focus calculation unit 208 determines that the focus point of the camera optics 207 is too far away from the image sensor 206, the focus calculation unit 208 may provide a control signal to the motor controller 210 to move the camera optics 207 nearer the image sensor and/or change the optical properties of one or more of the lens(es) of the camera optics 207 to move the focus point towards the image sensor 206. On the other hand, if the focus calculation unit 208 determines that the focus point of the camera optics 207 is too near the image sensor 206, the focus calculation unit 208 may provide a control signal to the motor controller 210 to move the camera optics 207 farther from the image sensor and/or change the optical properties of one or more of the lens(es) of the camera optics 207 to move the focus point away from the image sensor 206. If the focus calculation unit 208 determines that the focus point of the camera optics 207 is at a location which produces sharp enough image on the image sensor 206, the focus calculation unit 208 need not provide any control signals to the motor controller 210.

Figure 3 also illustrates a simplified example how the distance between the camera optics 207 and the image sensor 206 may be altered, in accordance with an embodiment. The motor control 210 may cause a motor 211, such as a stepper motor, to rotate a threaded axle 212 clockwise or counterclockwise depending on the direction in which the camera optics 207 should be moved. The threaded axle 212 penetrates through an opening of a moving element 213. The opening of the moving element 213 has a threading corresponding with the threading of the threaded axle 212. The camera optics 207 is coupled with the moving element 213 wherein the movement of the moving element 213 also causes the camera optics 207 to move. Hence, the rotation of the threaded axle 212 causes the movement of the moving element 213 either towards the imaging sensor 206 or farther away from the imaging sensor 206 depending on the direction of rotation of the threaded axle 212.

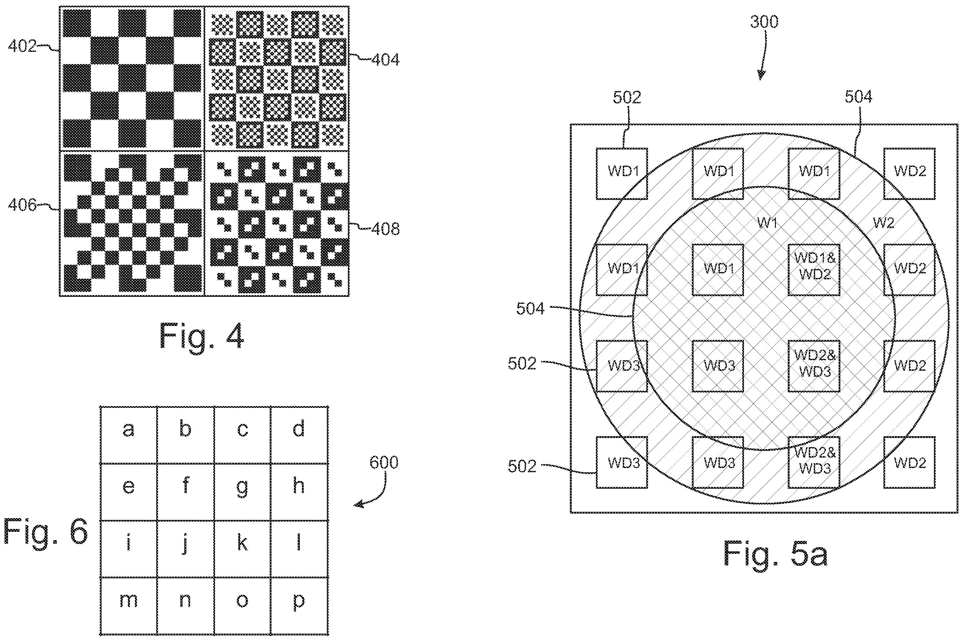

In the following, calibration of the camera optics may also be called as focus calibration. For calibration, a pre-defined known input may be used. If such a scene is not available, any input having high contrast details may be used in a similar manner. An advantage of using a pre-defined input is given by the fact that high performance thresholds may be used during calibration, to reject modules not able to reach a highly visually acceptable focusing. For this purpose, a specific kind of calibration image 300 may be used as the pre-defined input. The calibration image 300 may comprise different areas having one or more different kinds of patterns. Figure 4 depicts some non-limiting examples of such patterns 402, 404, 406, 408. These examples reveal that the calibration image 300 may be composed of plurality of high-contrast patterns (having sharp edges) at different areas of the calibration image 300 which may improve the reliability and/or increase the speed of the focus calibration. The calibration image 300 may comprise, for example, one or more of the patterns of Figure 4 and/or some other patterns at different areas of the calibration image 300. Hence, in accordance with an embodiment, the calibration image 300 has different areas having different size of details. For example, all the example patterns of Figure 4 could form one calibration image 300, wherein there would be a multiple of areas with differently sized details.

The area of the calibration image 300 may be divided into two or more types of regions. In accordance with an embodiment, the calibration image 300 is divided into a first type of regions of interest 502 and a second type of regions of interest 504. The first type of region of interest is called as a directional region and the second type of region of interest is called as an area region in this specification. The directional region is such a region which can be visually isolated if the sensor element 206 is rotated around its own central axis. The area region is a region which covers a part of the calibration image 300 but is not a directional region. Figure 5a illustrates an example of the calibration image 300 projected on the imaging sensor 206 divided into directional regions 502 and area regions 504. The calibration image 300 may be formed e.g. on a wall of a room, on a sheet of a planar object, or on some other appropriate place. There may also be different calibration images 300 at different distances from the camera unit 102.

There can be a certain degree of overlapping between the directional regions, but they do not fully overlap. For a so called fish eye-lens, parts of slices from an image frame may be used as is illustrated in Figure 5a in accordance with an embodiment. However, other types of regions may also be used in a similar manner for different types of lenses.

In Figure 5a the image area of the calibration image 300 (e.g. a frame) is divided into several directional regions 502 labeled with WD1, WD2, WD3. Areas where two regions overlap are marked with labels of both regions such as WD1 & WD2, WD2 & WD3.

In Figure 5a, also two area regions 504 have been depicted. They are labeled with W1 and W2. In this illustrative, non-limiting examples the first area region W1 is in the form of a circle (hatched with two-directional diagonal lines) and the second area region W2 is in the form of a donut (hatched with one-directional diagonal lines) but also other forms may be used instead of or in addition to circles and donuts, such as elliptic forms.

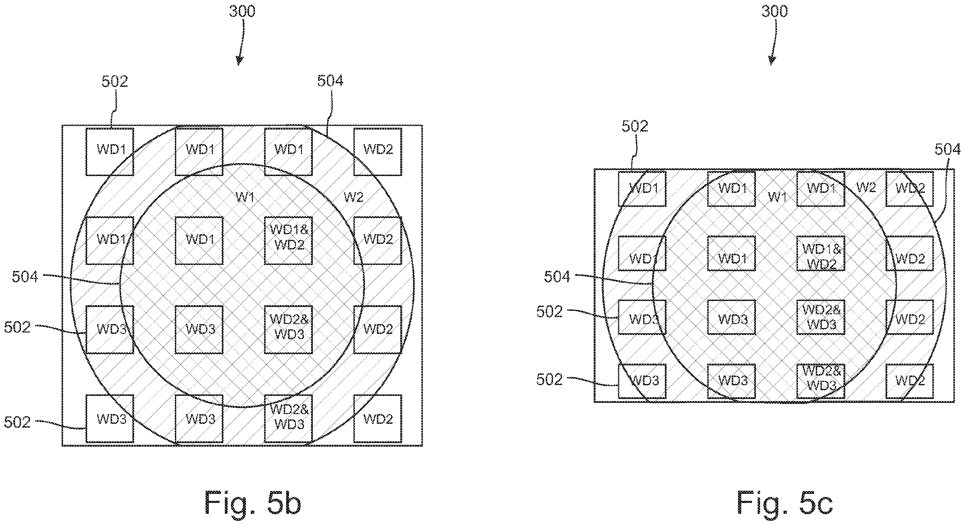

Figures 5b and 5c show two other examples of the calibration image 300 projected on the imaging sensor 206. In the example of Figure 5b the calibration image 300 is projected on a rectangular imaging sensor 206 so that the second area region W2 is cropped at the top and at the bottom. Correspondingly, in the example of Figure 5c the calibration image 300 is projected on a rectangular imaging sensor 206 so that also the first area region W1 is cropped at the top and at the bottom. The cropping may actually mean that the calibration image 300 itself is formed in the form of Figure 5b or 5c, or the camera optics 207 enlarges (zooms) the image bigger so that at least the top and bottom edges would not fit on the imaging sensor 206.

In accordance with an embodiment, the area regions W1, W2 are formed so that they are centred on an expected centre point of the imaging sensor 206 and the areas are rotational symmetric with respect to the centre point.

An initialization may be performed to initialize e.g. system parameters. Also in the initialization step one of directional regions of interest 502 may be chosen as a reference. In the reference region of interest, a focusing parameter may be computed in successive frames while modifying the distance between the camera sensor 206 and the camera optics 207. A maximum value is targeted to be achieved. For a better overall achieved focusing, the input frame is divided into several directional regions of interest 502, 504 such that computation is done at one time only in a selected part of the frame, in accordance with an embodiment. This may have better control of the overall adjustment and for better testing of different areas under focus compared to e.g. a global computation of the focus convergence parameter. However, computing the focus convergence parameter globally is also possible, and may be regarded as a particular case. The area based computing may allow for a very fine computation, control, and test of achieved focusing, possibly allowing to eliminate cases when global focusing is high but achieved final solution may consist of regions of variable focus convergence parameter.

After the initialization has been performed, edge detection may be performed on the basis of the calibration image 300. This may be performed, for example, as follows. The converter and sampler 208 may capture an image of the calibration image 300, transform the captured image to samples and store the sampled into the memory 100 of the camera 100. This image may be analyzed by the focus calculation unit 209. The focus calculation unit 209 may calculate an edge detector operator ED for different regions of the captured image 300. The edge detector operator may be computed as:

$$ED_{\text{Reg}} = \sum\nolimits_{\text{Reg} \in F, (i,j) \in \text{Reg}, (i+\delta, j+\delta) \in \text{Reg}} \left[ \left| \log F_{i,j} - \log F_{i+\delta, j+\delta} \right| \right] \tag{1}$$

where *Reg* represents regions of interest where computation is executed, *F* represents the image frame that contains the regions of interest, and $\delta$ defines the neighborhood around region pixel of coordinates $(i, j)$ where the edges are considered. Figure 6 illustrates an example of a region of interest comprising a matrix of pixels 600. In this example the region of interest comprises 16 pixels in a 4x4 matrix, thus i, j $\in$ 0, 1, 2, 3 and $\delta \in$ [-3, -2, -1, 0, 1, 2, 3] so that i+$\delta$, j+$\delta \in$ [0, 1, 2, 3]. It should be noted that also larger or smaller regions may be used. Furthermore, for simplicity, values $F_{i,j}$ of the pixels at different locations i,j are marked as a, b, c, ..., p in Figure 6. On the basis of Equation (1), the edge detector $ED_{o,o}$ for the first pixel (0,0) may be computed as |log a - log b|+|log a - log c|+|log a - log d|+|log a - log e|+|log a - log f|+...+|log a - log p|. The edge detector $ED_{0,1}$ for the second pixel (0,1) may be computed as |log b - log a|+|log b - log c|+|log b - log d|+|log b - log e|+|log b - log f|+...+|log b - log p|. The edge detector $ED_{3,3}$ for the last pixel (3,3) may be computed as |log p - log a|+|log p - log b|+...+|log p - log o|. These values may be summed to obtain the edge detector value $ED_{\text{Reg}}$ for this region of interest.

The focus convergence parameter FC may then be defined as the following sum for all directional regions of interest:

$$FC = \sum\nolimits_{DReg \in DRegions} WD_{DReg} \sum\nolimits_{Reg \in Regions} W_{Reg} ED_{Reg} \tag{2}$$

where $W_{\text{Reg}}$ represents the weight of each area region, and $WD_{DReg}$ represents the directional weight of each directional region in overall computation.

In accordance with another embodiment, edge detector operator ED for a region could be calculated so that the $\delta$-parameter only have zero or positive integer values. Then, the edge detector $ED_{o,o}$ for the first pixel (0,0) would be computed as in the example above but the computation of the other parameters would only take into consideration pixel values in the region limited by the pixel itself and the bottom right corner of the region. As an example, for the pixel (1,2), i.e. the pixel j in Figure 6, the computation would be |log j - log k|+|log j - log l|+|log j - log n|+|log j - log o|+|log j - log p|.

In accordance with yet another embodiment, edge detector operator ED for a region could be calculated so that the $\delta$-parameter only have zero or negative integer values. Then, the edge detector $ED_{o,o}$ for the last pixel (i,j) would be computed as in the first example above but the computation of the other parameters would only take into consideration pixel values in the region limited by the pixel itself and the top left corner of the region. As an example, for the pixel (1,2), i.e. the pixel j in Figure 6, the computation would be |log j - log a|+|log j - log b|+|log j - log e|+|log j - log f|+|log j - log i|.

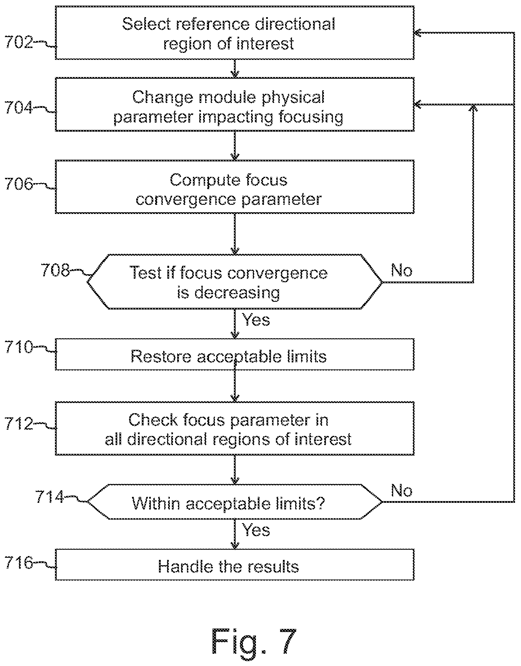

The focus convergence parameter FC may be used in the focus calibration process as follows, with reference to the flow diagram of Figure 7. The reference directional region of interest is selected at block 702. One or more physical parameters of the camera unit 102 impacting focusing may be changed (block 704) and the focus convergence parameter FC is computed (block 706). The computed focus convergence parameter FC may be compared to a previous focus convergence parameter to examine if the focus convergence parameter is decreasing (block 708). If not so, the process may step back to 704 for changing one or more physical parameters of the camera unit 102 impacting focusing. If the focus convergence parameter is decreasing, acceptable limits for the focus convergence parameter may be retrieved (block 710), wherein all focus convergence parameters computed for all directional regions of interest may be compared with the limits to determine if all the focus convergence parameters are within the acceptable limits (block 714). If so, the results may be handled (block 716). Otherwise, the process may step back to block 704 or even to block 702.

In accordance with an embodiment, when capturing a subsequent image the physical orientation of the camera unit 102 may be changed so that it captures a different region of the calibration image 300. Therefore, different regions get mapped differently on this image relative to a previous image. The same checking procedure may still be performed for this kind of subsequent image although it contains partly differently oriented capturing information of the calibration image.

The focus calibration results may include an identifier of the camera unit (ID), pass/fail overall result, and all regions convergence values with their focusing limits. For example, each camera unit 102 of a multi-camera system 100 may be provided with a unique identifier to distinguish different camera units 102a-102h of the multi-camera system 100. Additional result data may be a captured focused image per region. The data format used for this may be camera Bayer raw on 4 channels, or any other format that reflects the used image before post processing. The results may be uploaded in a cloud service for future inspection and usage. This process may be automatic, the user being notified also through user interface, or partly manual, wherein the user is instructed to manually adjust the camera optics after each calibration round.

For handling the needed inputs (including camera used settings) and results, a specific/dedicated cloud service may be used or the calculations may be performed by the processor 104 of the apparatus 100.

The sensor settings data used during focus calibration can either be pre-defined data taken from the cloud service, or can be dynamic sensor settings data that may as well be uploaded to the cloud.

The user can also select saving all data related to one focusing session, including all camera captured frames and settings, which may allow to fully reproduce the session

The invention describes a solution for achieving high performance focusing for various type of lenses and modules. In particular, it presents the usage for getting image sensors 102 of the multi-camera system 100 into focus. Therefore, fine focusing on overall visible scene may be possible with high perceived focusing quality for human visual system.

The method described above may be suitable for camera module systems that allow controlled adjustment of the actual distance between the camera sensor active surface and the used lens. As a result of applying the method, the focusing of the overall imaging system may be improved, the method can be used as a calibration method to achieve focusing before permanent fixing "in position" of the camera module system, or/and as fine on-line "live" focusing re-calibration if the used camera module allows it, or as a controlling unit for an autofocus system. Changing of the actual distance between the sensor and the lens can be done either manually (e.g. screws allowing changing distance through rotation) or controlling the change through the usage of a stepper motor.

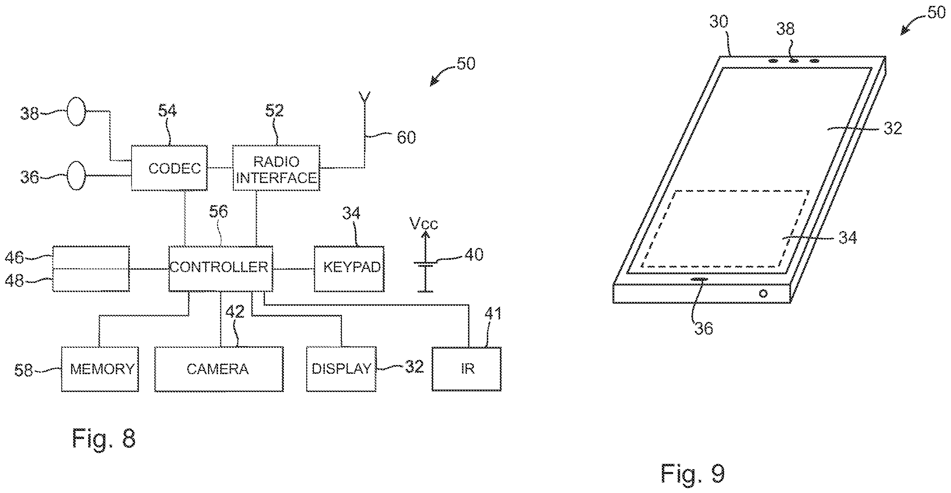

The following describes in further detail suitable apparatus and possible mechanisms for implementing the embodiments of the invention. In this regard reference is first made to Figure 8 which shows a schematic block diagram of an exemplary apparatus or electronic device 50 depicted in Figure 9, which may incorporate a transmitter according to an embodiment of the invention.

The electronic device 50 may for example be a mobile terminal or user equipment of a wireless communication system. However, it would be appreciated that embodiments of the invention may be implemented within any electronic device or apparatus which may require transmission of radio frequency signals.

The apparatus 50 may comprise a housing 30 for incorporating and protecting the device. The apparatus 50 further may comprise a display 32 in the form of a liquid crystal display. In other embodiments of the invention the display may be any suitable display technology suitable to display an image or video. The apparatus 50 may further comprise a keypad 34. In other embodiments of the invention any suitable data or user interface mechanism may be employed. For example the user interface may be implemented as a virtual keyboard or data entry system as part of a touch-sensitive display. The apparatus may comprise a microphone 36 or any suitable audio input which may be a digital or analogue signal input. The apparatus 50 may further comprise an audio output device which in embodiments of the invention may be any one of: an earpiece 38, speaker, or an analogue audio or digital audio output connection. The apparatus 50 may also comprise a battery 40 (or in other embodiments of the invention the device may be powered by any suitable mobile energy device such as solar cell, fuel cell or clockwork generator). The term battery discussed in connection with the embodiments may also be one of these mobile energy devices. Further, the apparatus 50 may comprise a combination of different kinds of energy devices, for example a rechargeable battery and a solar cell. The apparatus may further comprise an infrared port 41 for short range line of sight communication to other devices. In other embodiments the apparatus 50 may further comprise any suitable short range communication solution such as for example a Bluetooth wireless connection or a USB/FireWire wired connection.

The apparatus 50 may comprise a controller 56 or processor for controlling the apparatus 50. The controller 56 may be connected to memory 58 which in embodiments of the invention may store both data and/or may also store instructions for implementation on the controller 56. The controller 56 may further be connected to codec circuitry 54 suitable for carrying out coding and decoding of audio and/or video data or assisting in coding and decoding carried out by the controller 56.

The apparatus 50 may further comprise a card reader 48 and a smart card 46, for example a universal integrated circuit card (UICC) reader and a universal integrated circuit card for providing user information and being suitable for providing authentication information for authentication and authorization of the user at a network.

The apparatus 50 may comprise radio interface circuitry 52 connected to the controller and suitable for generating wireless communication signals for example for communication with a cellular communications network, a wireless communications system or a wireless local area network. The apparatus 50 may further comprise an antenna 60 connected to the radio interface circuitry 52 for transmitting radio frequency signals generated at the radio interface circuitry 52 to other apparatus(es) and for receiving radio frequency signals from other apparatus(es).

In some embodiments of the invention, the apparatus 50 comprises a camera 42 capable of recording or detecting imaging.

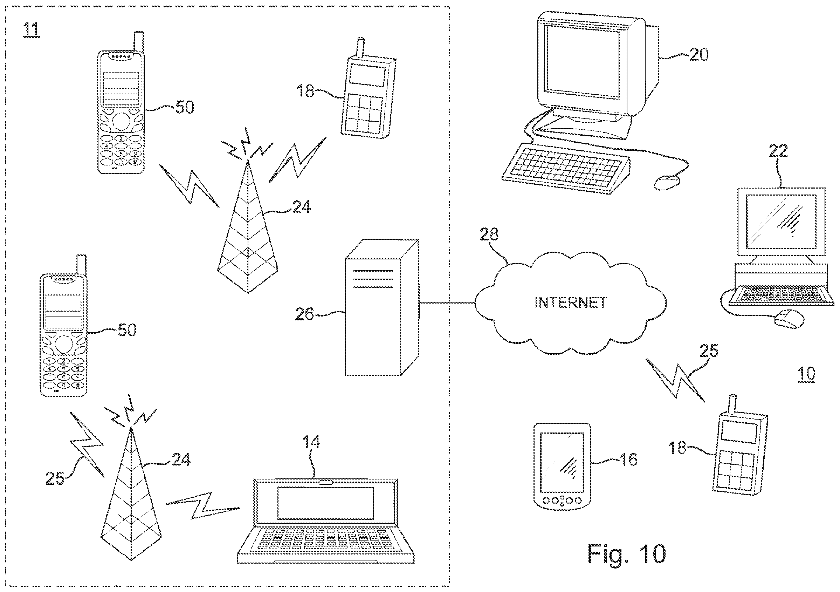

With respect to Figure 10, an example of a system within which embodiments of the present invention can be utilized is shown. The system 10 comprises multiple communication devices which can communicate through one or more networks. The system 10 may comprise any combination of wired and/or wireless networks including, but not limited to a wireless cellular telephone network (such as a global systems for mobile communications (GSM), universal mobile telecommunications system (UMTS), long term evolution (LTE) based network, code division multiple access (CDMA) network etc.), a wireless local area network (WLAN) such as defined by any of the IEEE 802.x standards, a Bluetooth personal area network, an Ethernet local area network, a token ring local area network, a wide area network, and the Internet.

For example, the system shown in Figure 10 shows a mobile telephone network 11 and a representation of the internet 28. Connectivity to the internet 28 may include, but is not limited to, long range wireless connections, short range wireless connections, and various wired connections including, but not limited to, telephone lines, cable lines, power lines, and similar communication pathways.

The example communication devices shown in the system 10 may include, but are not limited to, an electronic device or apparatus 50, a combination of a personal digital assistant (PDA) and a mobile telephone 14, a PDA 16, an integrated messaging device (IMD) 18, a desktop computer 20, a notebook computer 22, a tablet computer. The apparatus 50 may be stationary or mobile when carried by an individual who is moving. The apparatus 50 may also be located in a mode of transport including, but not limited to, a car, a truck, a taxi, a bus, a train, a boat, an airplane, a bicycle, a motorcycle or any similar suitable mode of transport.

Some or further apparatus may send and receive calls and messages and communicate with service providers through a wireless connection 25 to a base station 24. The base station 24 may be connected to a network server 26 that allows communication between the mobile telephone network 11 and the internet 28. The system may include additional communication devices and communication devices of various types.

The communication devices may communicate using various transmission technologies including, but not limited to, code division multiple access (CDMA), global systems for mobile communications (GSM), universal mobile telecommunications system (UMTS), time divisional multiple access (TDMA), frequency division multiple access (FDMA), transmission control protocol-internet protocol (TCP-IP), short messaging service (SMS), multimedia messaging service (MMS), email, instant messaging service (IMS), Bluetooth, IEEE 802.11, Long Term Evolution wireless communication technique (LTE) and any similar wireless communication technology. A communications device involved in implementing various embodiments of the present invention may communicate using various media including, but not limited to, radio, infrared, laser, cable connections, and any suitable connection. In the following some example implementations of apparatuses utilizing the present invention will be described in more detail.

Although the above examples describe embodiments of the invention operating within a wireless communication device, it would be appreciated that the invention as described above may be implemented as a part of any apparatus comprising a circuitry in which radio frequency signals are transmitted and received. Thus, for example, embodiments of the invention may be implemented in a mobile phone, in a base station, in a computer such as a desktop computer or a tablet computer comprising radio frequency communication means (e.g. wireless local area network, cellular radio, etc.).

In general, the various embodiments of the invention may be implemented in hardware or special purpose circuits or any combination thereof. While various aspects of the invention may be illustrated and described as block diagrams or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

Embodiments of the inventions may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

Programs, such as those provided by Synopsys, Inc. of Mountain View, California and Cadence Design, of San Jose, California automatically route conductors and locate components on a semiconductor chip using well established rules of design as well as libraries of pre stored design modules. Once the design for a semiconductor circuit has been completed, the resultant design, in a standardized electronic format (e.g., Opus, GDSII, or the like) may be transmitted to a semiconductor fabrication facility or "fab" for fabrication.

The foregoing description has provided by way of exemplary and non-limiting examples a full and informative description of the exemplary embodiment of this invention. However, various modifications and adaptations may become apparent to those skilled in the relevant arts in view of the foregoing description, when read in conjunction with the accompanying drawings and the appended claims.

**Claims**

1. A method for calibrating focus of a camera unit (102), the method comprising:

   obtaining a first image captured by the camera unit (102);
   selecting a first set of two or more reference regions (502, 504) from the first image;
   computing a first focus convergence parameter based on the first set of two or more reference regions (502, 504);
   adjusting optical properties of optics (207) of the camera unit (102) and rotating the camera unit (102) to change location of a focus of the optics (207);
   obtaining a second image captured by the camera unit (102);
   selecting a second set of two or more reference regions (502, 504) from the second image ;
   computing a second focus convergence parameter based on the second set of two or more reference regions (502, 504) of the second image; and
   comparing the first and second focus convergence parameter to determine if focus quality was improved.

2. The method according to claim 1, wherein the two or more reference regions (502, 504) comprise at least a first reference region (502, 504) and a second reference region (502, 504), the method comprising:
   using a different weight for the first reference region (502, 504) than for the second reference region (502, 504) in the computation of the focus convergence parameters.

3. The method according to claim 1 or 2, wherein if the comparison indicates that focus quality was improved, the method comprises:
   determining if the focus quality is within predetermined limits.

4. The method according to claim 3, wherein if the focus quality is not within the predetermined limits, the method further comprises:

   obtaining a third image captured by the camera unit (102);
   selecting two or more reference regions (502, 504) from the third image;
   computing a third focus convergence parameter based on the two or more reference regions (502, 504) of the third image;
   comparing the third focus convergence parameter with at least one of the first and second convergence parameters to determine if focus quality was improved.

5. The method according to any of the claims 1 to 4, wherein if the comparison indicates that focus quality was not improved, performing at least one of the following:

   reverting the previous adjustment;
   performing the adjusting in a reversed direction;
   selecting different two or more regions;
   decreasing an amount of adjustment.

6. An apparatus comprising at least one processor; and at least one memory (106) including computer program code the at least one memory (106) and the computer program code configured to, with the at least one processor (104), cause the apparatus to perform at least the following:

   obtain a first image captured by a camera unit (102);
   select a first set of two or more reference regions (502, 504) from the first image;
   compute a first focus convergence parameter based on the first set of two or more reference regions (502, 504);
   adjust optical properties of optics (207) of the camera unit and rotate the camera unit (102) to change location of a focus of the optics (207);
   obtain a second image captured by the camera unit (102);
   select a second set of two or more reference regions (502, 504) from the second image which may be different from the first set of two or more reference regions (502, 504) of the first image;

compute a second focus convergence parameter based on the second set of two or more reference regions (502, 504) of the second image; and
compare the first and second focus convergence parameter to determine if the focus convergence parameter focus quality was improved.

7. The apparatus according to claim 6, wherein the two or more reference regions (502, 504) comprise at least a first reference region (502, 504) and a second reference region (502, 504), the apparatus comprising:
using a different weight for the first reference region (502, 504) than for the second reference region (502, 504) in the computation of the focus convergence parameters.

8. The apparatus according to claim 6 or 7, wherein if the comparison indicates that focus quality was improved, the apparatus comprises:
determining if the focus quality is within predetermined limits.

9. The apparatus according to claim 8, wherein if the focus quality is not within the predetermined limits, the apparatus further comprises:

obtaining a third image captured by the camera unit (102);
selecting two or more reference regions (502, 504) from the third image;
computing a third focus convergence parameter based on the two or more reference regions (502, 504) of the third image;
comparing the third focus convergence parameter with at least one of the first and second convergence parameters to determine if focus quality was improved.

10. The apparatus according to any of the claims 6 to 9, wherein if the comparison indicates that focus quality was not improved, performing at least one of the following:

reverting the previous adjustment;
performing the adjusting in a reversed direction;
selecting different two or more regions;
decreasing an amount of adjustment.

11. The apparatus according to any of the claims 6 to 10 comprising:

capturing by the camera unit (102) a plurality of images;
computing a focus convergence parameter based on the two or more reference regions (502, 504) for each of the plurality of images;
adjusting optical properties of optics (207) of the camera unit (102) between each image capture to change location of a focus of the optics (207);
comparing two focus convergence parameters computed to two successive images to determine if focus quality was improved by the adjustment;
determining on the basis of the comparison whether to continue the focus quality adjustment.

12. The apparatus according to any of the claims 6 to 11, wherein the two or more reference regions (502, 504) comprise at least one directional region (502) and at least one area region (504), wherein the computation of the focus convergence parameters comprises:

computing an edge detection operator ED by the equation:

$$ED_{\mathrm{Reg}} = \sum\nolimits_{\mathrm{Reg} \in F, (i,j) \in \mathrm{Reg}, (i+\delta, j+\delta) \in \mathrm{Reg}} \left\| \log F_{i,j} - \log F_{i+\delta, j+\delta} \right\|,$$

where Reg represents regions of interest where computation is executed, *F* represents an image frame that contains the two or more reference regions (502, 504), and $\delta$ defines a neighborhood around coordinates (*i, j*) where the edges are considered; and
computing the focus convergence parameter FC by the equation:

$$FC = \sum_{DReg \in DRegions} WD_{DReg} \sum_{Reg \in Regions} W_{Reg} ED_{Reg} \,,$$

where $W_{Reg}$ represents a weight of each area region (504), and $WD_{DReg}$ represents a directional weight of each directional region (502) in overall computation.

13. The apparatus according to any of the claims 6 to 12, wherein the two or more reference regions (502, 504) comprise at least one directional region (502) and at least one area region (504), said directional region (502) being a region which can be visually isolated if a sensor element of the camera unit (102) were rotated around its own central axis, and said area region (504) is a region which covers a part of the captured image but is not the directional region (502).

14. The apparatus according to any of the claims 6 to 13, wherein a physical orientation of the camera unit (102) is changed between capturing the first image and the second image.

15. A computer readable storage medium stored with code thereon for use by an apparatus, which when executed by a processor, causes the apparatus to:

obtain a first image captured by a camera unit (102);
select a first set of two or more reference regions (502, 504) from the first image;
compute a first focus convergence parameter based on the first set of two or more reference regions (502, 504);
adjust optical properties of optics (207) of the camera unit (102) and rotate the camera unit (102) to change location of a focus of the optics (207);
obtain a second image captured by the camera unit (102);
select a second set of two or more reference regions (502, 504) from the second image which may be different from the first set of two or more reference regions (502, 504) of the first image;
compute a second focus convergence parameter based on the second set of two or more reference regions (502, 504) of the second image; and
compare the first and second focus convergence parameter to determine if the focus convergence parameter focus quality was improved.

**Patentansprüche**

1. Ein Verfahren zum Kalibrieren des Fokus einer Kameraeinheit (102), wobei dieses Verfahren umfasst:

Erhalten eines ersten Bilds, das mit der Kameraeinheit (102) aufgenommen wird;
Auswählen eines ersten Satzes von zwei oder mehreren Referenzbereichen (502, 504) auf dem ersten Bild;
Berechnen eines ersten Fokuskonvergenzparameters auf der Basis des ersten Satzes von zwei oder mehr Referenzbereichen (502, 504);
Anpassen der optischen Eigenschaften der Optik (207) der Kameraeinheit (102) und Rotieren der Kameraeinheit (102), um die Position eines Fokus der Optik (207) zu ändern;
Erhalten eines zweiten Bilds, das mit der Kameraeinheit (102) aufgenommen wird;
Auswählen eines zweiten Satzes von zwei oder mehr Referenzbereichen (502, 504) auf dem zweiten Bild;
Berechnen eines zweiten Fokuskonvergenzparameters auf der Basis des zweiten Satzes von zwei oder mehr Referenzbereichen (502, 504) auf dem zweiten Bild; und
Vergleichen des ersten und zweiten Fokuskonvergenzparameters, um festzulegen, ob die Fokusqualität verbessert wurde.

2. Das Verfahren nach Anspruch 1, wobei die zwei oder mehr Referenzbereiche (502, 504) mindestens einen ersten Referenzbereich (502, 504) und einen zweiten Referenzbereich (502, 504) aufweisen, wobei das Verfahren umfasst: Verwenden eines anderen Gewichts für den ersten Referenzbereich (502, 504) als für den zweiten Referenzbereich (502, 504) beim Berechnen des Fokuskonvergenzparameters.

3. Das Verfahren nach Anspruch 1 oder 2, wobei, wenn der Vergleich auf eine Verbesserung der Fokusqualität hinweist, das Verfahren umfasst:
Festlegen, ob die Fokusqualität innerhalb vorgegebener Grenzen liegt.

4. Das Verfahren nach Anspruch 3, wobei, wenn die Fokusqualität nicht innerhalb der vorgegebenen Grenzen liegt, das Verfahren weiter umfasst:

Erhalten eines dritten Bilds, das mit der Kameraeinheit (102) aufgenommen wird;
Auswählen von zwei oder mehr Referenzbereichen (502, 504) auf dem dritten Bild;
Berechnen eines dritten Fokuskonvergenzparameters auf der Basis der zwei oder mehr Referenzbereiche (502, 504) auf dem dritten Bild;
Vergleichen des dritten Fokuskonvergenzparameters mit mindestens einem der ersten und zweiten Fokuskonvergenzparameter, um festzulegen, ob die Fokusqualität verbessert wurde.

5. Das Verfahren nach einem beliebigen der Ansprüche 1 bis 4, wobei, wenn der Vergleich auf eine Nichtverbesserung der Fokusqualität hinweist, mindestens einer der folgenden Schritte ausgeführt wird:

Zurücksetzen der vorherigen Anpassung;
Ausführen der Anpassung in umgekehrter Richtung;
Auswählen anderer zwei oder mehr Bereiche;
Verringern eines Anpassungswerts.

6. Eine Vorrichtung mit mindestens einem Prozessor und mindestens einem Speicher (106) mit einem Computerprogrammcode, wobei der mindestens eine Speicher (106) und der dafür konfigurierte Computerprogrammcode, zusammen mit mindestens einem Prozessor (104), die Vorrichtung dazu bringen, mindestens folgende Schritte auszuführen:

Erhalten eines ersten Bilds, das mit der Kameraeinheit (102) aufgenommen wird;
Auswählen eines ersten Satzes von zwei oder mehreren Referenzbereichen (502, 504) auf dem ersten Bild;
Berechnen eines ersten Fokuskonvergenzparameters auf der Basis des ersten Satzes von zwei oder mehr Referenzbereichen (502, 504);
Anpassen der optischen Eigenschaften der Optik (207) der Kameraeinheit und Rotieren der Kameraeinheit (102), um die Position eines Fokus der Optik (207) zu ändern;
Erhalten eines zweiten Bilds, das mit der Kameraeinheit (102) aufgenommen wird;
Auswählen eines zweiten Satzes von zwei oder mehr Referenzbereichen (502, 504) auf dem zweiten Bild, die sich vom ersten Satz von zwei oder mehr Referenzbereichen (502, 504) des ersten Bilds unterscheiden können;
Berechnen eines zweiten Fokuskonvergenzparameters auf der Basis des zweiten Satzes von zwei oder mehr Referenzbereichen (502, 504) auf dem zweiten Bild; und
Vergleichen des ersten und zweiten Fokuskonvergenzparameters, um festzulegen, ob die Fokusqualität der Fokuskonvergenzparameter verbessert wurde.

7. Die Vorrichtung nach Anspruch 6, wobei die zwei oder mehr Referenzbereiche (502, 504) mindestens einen ersten Referenzbereich (502, 504) und einen zweiten Referenzbereich (502, 504) aufweisen, wobei die Vorrichtung umfasst:
Verwenden eines anderen Gewichts für den ersten Referenzbereich (502, 504) als für den zweiten Referenzbereich (502, 504) beim Berechnen der Fokuskonvergenzparameter.

8. Die Vorrichtung nach Anspruch 6 oder 7, wobei, wenn der Vergleich auf eine Verbesserung der Fokusqualität hinweist, die Vorrichtung umfasst:
Festlegen, ob die Fokusqualität innerhalb vorgegebener Grenzen liegt.

9. Die Vorrichtung nach Anspruch 8, wobei, wenn die Fokusqualität nicht innerhalb der vorgegebenen Grenzen liegt, die Vorrichtung weiter umfasst:

Erhalten eines dritten Bilds, das mit der Kameraeinheit (102) aufgenommen wird;
Auswählen von zwei oder mehr Referenzbereichen (502, 504) auf dem dritten Bild;
Berechnen eines dritten Fokuskonvergenzparameters auf der Basis der zwei oder mehr Referenzbereiche (502, 504) auf dem dritten Bild;
Vergleichen des dritten Fokuskonvergenzparameters mit mindestens einem der ersten und zweiten Fokuskonvergenzparameter, um festzulegen, ob die Fokusqualität verbessert wurde.

10. Die Vorrichtung nach einem beliebigen der Ansprüche 6 bis 9, wobei, wenn der Vergleich auf eine Nichtverbesserung der Fokusqualität hinweist, mindestens einer der folgenden Schritte ausgeführt wird:

Zurücksetzen der vorherigen Anpassung;
Ausführen der Anpassung in umgekehrter Richtung;
Auswählen anderer zwei oder mehr Bereiche;
Verringern eines Anpassungswerts.

**11.** Die Vorrichtung nach einem beliebigen der Ansprüche 6 bis 10 mit:

Aufnehmen einer Vielzahl von Bildern mit der Kameraeinheit (102);
Berechnen eines Fokuskonvergenzparameters auf der Basis der zwei oder mehr Referenzbereiche (502, 504) für jedes Bild der Vielzahl von Bildern;
Anpassen der optischen Eigenschaften der Optik (207) der Kameraeinheit (102) zwischen jeder Bildaufnahme, um die Position eines Fokus der Optik (207) zu ändern;
Vergleichen der zwei Fokuskonvergenzparameter, die für zwei aufeinanderfolgende Bilder berechnet wurden, um festzulegen, ob die Fokusqualität durch die Anpassung verbessert wurde;
Festlegen, auf der Basis des Vergleichs, ob die Anpassung der Fokusqualität fortzusetzen ist.

**12.** Die Vorrichtung nach einem beliebigen der Ansprüche 6 bis 11, wobei die zwei oder mehr Referenzbereiche (502, 504) mindestens einen Richtungsbereich (502) und mindestens einen Flächenbereich (504) aufweisen, wobei das Berechnen der Fokuskonvergenzparameter umfasst:

Berechnen eines Randdetektionsoperators ED laut folgender Gleichung:

$$ED_{\text{Reg}} = \sum\nolimits_{\text{Reg} \in F, (i,j) \in \text{Reg}, (i+\delta, j+\delta) \in \text{Reg}} \left\| \log F_{i,j} - \log F_{i+\delta, j+\delta} \right\|,$$

wobei $R_{eg}$ für die Bereiche von Interesse steht, in denen die Berechnung ausgeführt wird, $F$ für einen Bildrahmen steht, der die zwei oder mehr Referenzbereiche (502, 504) enthält, und $\delta$ einen Nachbarschaftsbereich um die Koordinaten $(i,j)$ definiert, in dem die Ränder berücksichtigt werden; und
Berechnen des Fokuskonvergenzparameters FC laut folgender Gleichung:

$$FC = \sum\nolimits_{DReg \ DRegions} WD_{DReg} \sum\nolimits_{Reg \ Regions} W_{Reg} \ ED_{Reg},$$

wobei $W_{Reg}$ für ein Gewicht für jeden Flächenbereich (504) steht und $WD_{DReg}$ für ein Richtungsgewicht für jeden Richtungsbereich (502) in der Gesamtberechnung steht.

**13.** Die Vorrichtung nach einem beliebigen der Ansprüche 6 bis 12, wobei die zwei oder mehr Referenzbereiche (502, 504) mindestens einen Richtungsbereich (502) und mindestens einen Flächenbereich (504) aufweisen, wobei der genannte Richtungsbereich (502) einem Bereich entspricht, der visuell isoliert werden kann, wenn ein Sensorelement der Kameraeinheit (102) um seine eigene Mittelachse gedreht wird, und wobei der genannte Flächenbereich (504) einem Bereich entspricht, der einen Teil des aufgenommenen Bilds abdeckt, aber nicht der Richtungsbereich (502) ist.

**14.** Die Vorrichtung nach einem beliebigen der Ansprüche 6 bis 13, wobei eine physische Ausrichtung der Kameraeinheit (102) zwischen der Aufnahme des ersten Bilds und des zweiten Bilds geändert wird.

**15.** Ein computerlesbares Speichermedium, das mit dem entsprechenden Code gespeichert wird, um durch eine Vorrichtung verwendet zu werden, die, bei deren Ausführung durch einen Prozessor, die Vorrichtung dazu bringt, folgende Schritte durchzuführen:

Erhalten eines ersten Bilds, das mit der Kameraeinheit (102) aufgenommen wird;
Auswählen eines ersten Satzes von zwei oder mehreren Referenzbereichen (502, 504) auf dem ersten Bild;
Berechnen eines ersten Fokuskonvergenzparameters auf der Basis des ersten Satzes von zwei oder mehr Referenzbereichen (502, 504);
Anpassen der optischen Eigenschaften der Optik (207) der Kameraeinheit (102) und Rotieren der Kameraeinheit (102), um die Position eines Fokus der Optik (207) zu ändern;
Erhalten eines zweiten Bilds, das mit der Kameraeinheit (102) aufgenommen wird;

Auswählen eines zweiten Satzes von zwei oder mehr Referenzbereichen (502, 504) auf dem zweiten Bild, die sich vom ersten Satz von zwei oder mehr Referenzbereichen (502, 504) des ersten Bilds unterscheiden können;

Berechnen eines zweiten Fokuskonvergenzparameters auf der Basis des zweiten Satzes von zwei oder mehr Referenzbereichen (502, 504) auf dem zweiten Bild; und

Vergleichen des ersten und zweiten Fokuskonvergenzparameters, um festzulegen, ob die Fokusqualität der Fokuskonvergenzparameter verbessert wurde.

**Revendications**

1. Procédé d'étalonnage de la mise au point d'une unité de caméra (102), dans lequel le procédé comprend :

   l'obtention d'une première image capturée par l'unité de caméra (102) ;
   la sélection d'un premier groupe de deux zones de référence ou plus (502, 504) sur la première image ;
   le calcul d'un premier paramètre de convergence de mise au point sur la base du premier groupe de deux zones de référence ou plus (502, 504) ;
   l'ajustement des propriétés optiques de l'optique (207) de l'unité de caméra (102) et la rotation de l'unité de caméra (102) afin de changer l'emplacement d'une mise au point de l'optique (207) ;
   l'obtention d'une seconde image capturée par l'unité de caméra (102) ;
   la sélection d'un second groupe de deux zones de référence ou plus (502, 504) sur la seconde image ;
   le calcul d'un second paramètre de convergence de mise au point sur la base du second groupe de deux zones de référence ou plus (502, 504) de la seconde image ; et
   la comparaison du premier et du second paramètres de convergence de mise au point afin de déterminer si la qualité de mise au point a été améliorée.

2. Procédé selon la revendication 1, dans lequel les deux zones de référence ou plus (502, 504) comprennent au moins une première zone de référence (502, 504) et une seconde zone de référence (502, 504), dans lequel le procédé comprend :
   l'utilisation d'une pondération différente pour la première zone de référence (502, 504) par rapport à la seconde zone de référence (502, 504) lors du calcul des paramètres de convergence de mise au point.

3. Procédé selon la revendication 1 ou 2, dans lequel, si la comparaison indique que la qualité de mise au point a été améliorée, le procédé comprend :
   la détermination du fait que la qualité de mise au point se trouve ou non dans des limites prédéterminées.

4. Procédé selon la revendication 3, dans lequel, si la qualité de mise au point ne se trouve pas dans les limites prédéterminées, le procédé comprend en outre :

   l'obtention d'une troisième image capturée par l'unité de caméra (102) ;
   la sélection de deux zones de référence ou plus (502, 504) sur la troisième image ;
   le calcul d'un troisième paramètre de convergence de mise au point sur la base des deux zones de référence ou plus (502, 504) de la troisième image ;
   la comparaison du troisième paramètre de convergence de mise au point avec au moins l'un du premier et du second paramètres de convergence afin de déterminer si la qualité de mise au point a été améliorée.

5. Procédé selon l'une quelconque des revendications 1 à 4, dans lequel, si la comparaison indique que la qualité de mise au point n'a pas été améliorée, au moins l'un de ce qui suit est exécuté :

   le retour à l'ajustement précédent ;
   la réalisation de l'ajustement dans un sens inverse ;
   la sélection de deux zones ou plus différentes ;
   la diminution d'une quantité d'ajustement.

6. Appareil qui comprend au moins un processeur, et au moins une mémoire (106) qui comprend un code de programme informatique, dans lequel la au moins une mémoire (106) et le code de programme informatique sont configurés pour permettre à l'appareil, avec le au moins un processeur (104), d'exécuter au moins ce qui suit :

   l'obtention d'une première image capturée par une unité de caméra (102) ;

la sélection d'un premier groupe de deux zones de référence ou plus (502, 504) sur la première image ;

le calcul d'un premier paramètre de convergence de mise au point sur la base du premier groupe de deux zones de référence ou plus (502, 504) ;

l'ajustement des propriétés optiques de l'optique (207) de l'unité de caméra et la rotation de l'unité de caméra (102) afin de changer l'emplacement d'une mise au point de l'optique (207) ;

l'obtention d'une seconde image capturée par l'unité de caméra (102) ;

la sélection d'un second groupe de deux zones de référence ou plus (502, 504) sur la seconde image, qui peuvent être différentes du premier groupe de deux zones de référence ou plus (502, 504) de la première image ;

le calcul d'un second paramètre de convergence de mise au point sur la base du second groupe de deux zones de référence ou plus (502, 504) de la seconde image ; et

la comparaison du premier et du second paramètres de convergence de mise au point afin de déterminer si la qualité de mise au point du paramètre de convergence de mise au point a été améliorée.

7. Appareil selon la revendication 6, dans lequel les deux zones de référence ou plus (502, 504) comprennent au moins une première zone de référence (502, 504) et une seconde zone de référence (502, 504), dans lequel l'appareil comprend :

l'utilisation d'une pondération différente pour la première zone de référence (502, 504) par rapport à la seconde zone de référence (502, 504) lors du calcul des paramètres de convergence de mise au point.

8. Appareil selon la revendication 6 ou 7, dans lequel, si la comparaison indique que la qualité de mise au point a été améliorée, l'appareil comprend :

la détermination du fait que la qualité de mise au point se trouve ou non dans des limites prédéterminées.

9. Appareil selon la revendication 8, dans lequel, si la qualité de mise au point ne se trouve pas dans les limites prédéterminées, l'appareil comprend en outre :

l'obtention d'une troisième image capturée par l'unité de caméra (102) ;

la sélection de deux zones de référence ou plus (502, 504) sur la troisième image ;

le calcul d'un troisième paramètre de convergence de mise au point sur la base des deux zones de référence ou plus (502, 504) de la troisième image ;

la comparaison du troisième paramètre de convergence de mise au point avec au moins l'un du premier et du second paramètres de convergence afin de déterminer si la qualité de mise au point a été améliorée.

10. Appareil selon l'une quelconque des revendications 6 à 9, dans lequel, si la comparaison indique que la qualité de mise au point n'a pas été améliorée, au moins l'un de ce qui suit est exécuté :

le retour à l'ajustement précédent ;

la réalisation de l'ajustement dans un sens inverse ;

la sélection de deux zones ou plus différentes ;

la diminution d'une quantité d'ajustement.

11. Appareil selon l'une quelconque des revendications 6 à 10, qui comprend :

la capture, par l'unité de caméra (102), d'une pluralité d'images ;

le calcul d'un paramètre de convergence de mise au point sur la base des deux zones de référence ou plus (502, 504) pour chacune de la pluralité d'images ;

l'ajustement des propriétés optiques (207) de l'unité de caméra (102) entre chaque capture d'image afin de changer l'emplacement d'une mise au point de l'optique (207) ;

la comparaison de deux paramètres de convergence de mise au point calculés avec deux images successives afin de déterminer si la qualité de mise au point a été améliorée par l'ajustement ;

la détermination, sur la base de la comparaison, du fait que l'ajustement de qualité de mise au point doive être poursuivi ou non.

12. Appareil selon l'une quelconque des revendications 6 à 11, dans lequel les deux zones de référence ou plus (502, 504) comprennent au moins une zone directionnelle (502) et au moins une zone de surface (504), dans lequel le calcul des paramètres de convergence de mise au point comprend :

le calcul d'un opérateur de détection de bord ED par l'équation :

$$ED_{\text{Reg}} = \sum_{\text{Reg} \in F, (i,j) \in \text{Reg}, (i+\delta, j+\delta) \in \text{Reg}} \left\| \log F_{i,j} - \log F_{i+\delta, j+\delta} \right\|,$$

où $R_{eg}$ représente les zones d'intérêt dans lesquelles un calcul est exécuté, $F$ représente une trame d'image qui contient les deux zones de référence ou plus (502, 504), et $\delta$ définit des environs autour des coordonnées $(i, j)$ dans lesquels les bords sont pris en considération ;
et
le calcul du paramètre de convergence de mise au point FC par l'équation :

$$FC = \sum_{DReg \in DRegions} WD_{DReg} \sum_{Reg \in Regions} W_{Reg} ED_{Reg},$$

où $W_{Reg}$ représente une pondération de chaque zone de surface (504), et $WD_{DReg}$ représente une pondération directionnelle de chaque zone directionnelle (502) dans le calcul global.

13. Appareil selon l'une quelconque des revendications 6 à 12, dans lequel les deux zones de référence ou plus (502, 504) comprennent au moins une zone directionnelle (502) et au moins une zone de surface (504), dans lequel ladite zone directionnelle (502) est une zone qui peut être visuellement isolée si un élément de capteur de l'unité de caméra (102) a été tourné autour de son propre axe central, et ladite zone de surface (504) est une zone qui recouvre une partie de l'image capturée mais qui n'est pas la zone directionnelle (502).

14. Appareil selon l'une quelconque des revendications 6 à 13, dans lequel une orientation physique de l'unité de caméra (102) est changée entre la capture de la première image et de la seconde image.

15. Support de stockage lisible par un ordinateur et qui contient un code destiné à être utilisé par un appareil, qui, lorsqu'il est exécuté par un processeur, permet à l'appareil :

d'obtenir une première image capturée par une unité de caméra (102) ;
de sélectionner un premier groupe de deux zones de référence ou plus (502, 504) sur la première image ;
calculer un premier paramètre de convergence de mise au point sur la base du premier groupe de deux zones de référence ou plus (502, 504) ;
d'ajuster les propriétés optiques de l'optique (207) de l'unité de caméra (102) et de faire tourner l'unité de caméra (102) afin de changer l'emplacement d'une mise au point de l'optique (207) ;
d'obtenir une seconde image capturée par l'unité de caméra (102) ;
de sélectionner un second groupe de deux zones de référence ou plus (502, 504) sur la seconde image, qui peuvent être différentes du premier groupe de deux zones de référence ou plus (502, 504) de la première image ;
de calculer un second paramètre de convergence de mise au point sur la base du second groupe de deux zones de référence ou plus (502, 504) de la seconde image ; et
de comparer le premier et le second paramètres de convergence de mise au point afin de déterminer si la qualité de mise au point du paramètre de convergence de mise au point a été améliorée ou non.

EP 3 542 218 B1

Fig. 1b

Fig. 1a

18

Focus calculation 209

Motor Control 210

Converter & Sampler 208

206

207

211

212

213

300

Fig. 3

206

207

f

203

Fig. 2a

206

207

f

203

Fig. 2b

206

207

f

203

Fig. 2c

Fig. 5a

Fig. 4

Fig. 6

Fig. 5c

Fig. 5b

Fig. 7

Fig. 9

Fig. 8

Fig. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016042194 A